Europäisches Patentamt

European Patent Office

Office européen des brevets

(19)

(11) Publication number: **0 313 016 B1**

(12) **EUROPEAN PATENT SPECIFICATION**

(45) Date of publication of patent specification: 04.08.93

(51) Int. Cl.5: **C04B 18/02**, C04B 18/04, A62D 3/00, C09K 3/14, B01J 32/00

(21) Application number: 88117398.3

(22) Date of filing: 19.10.88

The file contains technical information submitted after the application was filed and not included in this specification

(54) **Inorganic, insoluble industrial raw material producible from waste, method for its production and use.**

(30) Priority: 21.10.87 US 110838

(43) Date of publication of application:
26.04.89 Bulletin 89/17

(45) Publication of the grant of the patent:
04.08.93 Bulletin 93/31

(84) Designated Contracting States:
**AT BE CH DE ES FR GB GR IT LI LU NL SE**

(56) References cited:
**DE-A- 3 150 993**
**DE-A- 3 528 054**
**DE-A- 3 600 644**
**DE-A- 3 630 697**

**CHEMICAL ABSTRACTS, vol. 104, no. 8, February 1986, page 291, abstract no. 55337m, Columbus, Ohio, US**

(73) Proprietor: **Förster, Fritz**
**3590 Kaneff Crescent Apt 1210**
**Mississauga Ontario L5A 3X3(CA)**

(72) Inventor: **Weinwurm, Peter**
**3590 Kaneff Crescent Apt. 606**
**Mississauga Ontario L5A 3X3(CA)**

(74) Representative: **Hansen, Bernd, Dr.rer.nat. et al**
**Hoffmann, Eitle & Partner, Patentanwälte,**
**Postfach 81 04 20**
**W-8000 München 81 (DE)**

EP 0 313 016 B1

**Description**

The invention relates to industrial raw materials which can be produced from waste.

Nowadays industrial raw materials are becoming more and more expensive to produce because of the increasing shortage of the natural material sources. On the other hand, the amount of waste is increasing and raises environmental problems with regard to its destruction. Disposal of waste materials is a problem of growing complexity confronting municipalities and other treatment plant operators, particularly in view of the adoption everywhere of stricter environmental standards. The most recently used treatment systems and technology are based on the principle of incineration, chemical and physical treatment and solidification. The results of such prior art treatment is a residue which is typically used as land fill. Leaching of waste is a continuing problem. The treatment of waste material is very often extremely difficult, complex and expensive. Equipment suitable for accommodating different types of waste from the variety of sources is more complicated and hence more expensive. The residue and emissions from waste treatment processes in use today are of concern because of the hazards they pose. Furthermore, the use of toxic waste residue for the purpose of land filling has its limitations. Current technology also requires transportation of huge volumes of waste material from the source of the waste to the treatment facility. This of course poses a safety and health hazard. The threat of spillage of toxic material during transportation or leaching from the final disposal site persists. For the above reasons, there is a need for the inexpensive production of industrial raw material from waste material by methods which are effective with regard to economy and environmental protection.

DE-A-36 30 697 includes a process for calcining waste materials resulting in a fused clinker product of relatively residual low porosity of 6%. The calcining step included in the above process requires 4-6 hours in order to produce the clinker product.

DE-A-36 00 644 reveals a process for rendering contaminated fine-grained dust-type materials chemically stable by mixing the dust with the powdery alum-cement and water. According to the above process, the materials are heat-treated in a medium temperature range below 150°C and, if necessary, in a high temperature range up to 1500°C.

In DE-A-35 28 054 finely ground or pulverized toxic materials are mixed with soda or potash waterglass and are formed into spheres which are hardened into stable bodies and are then coated with additional potash or soda waterglass and diatomaceous earth, magnesium oxide or fluoro spat, allowed to harden, and fired for 1-2 hours at temperatures up to 1200°C resulting in a final dense product.

DE-A-31 50 993 includes a process for the treatment of contaminated fine-grained water-deposited sediments containing heavy metal contamination. The sediments are mechanically dehydrated to 55% water content and mixed with only flying ash and/or kaoline and at least up to 5% of one of red slurry and oil, dried at 300-400°C and then fired in a rotary drum furnace in the flame zone at 1000-1200°C.

The object of the present invention is to provide an industrial raw material producible from waste which can be used for a variety of applications.

A further object of the present invention is to provide a method for the production of such material by the treating and handling of waste that is flexible, efficient, economical and safe.

The above object is accomplished by inorganic, insoluble industrial raw material, based on processed waste defined below, which is characterized by a particle size of 0.2-15 cm, whereby 0.3-8 cm are preferred. Depending on the use of the above material a particle size of 0.4-2.5 cm, especially 0.5-1.5 cm, might also be favorable. The bulk density of the above material in general lies in the range of 400-1000 kg/m$^3$ and the specific gravity results in 600-1300 kg/m$^3$. The material exhibits a pH value of 6.0 to 10.5, most preferred is 6.5-7.8, preferably a hydrophilic surface and an absorption of moisture in the range of 0.5-14 wt.%. The metal content is 0.5-60 wt.%, preferably 10-45 wt.%, and particularly preferred is 25-38 wt.%. The temperature resistance ranges up to 1150°C. The product has a brown to grey color and is odorless. The material is furthermore characterized by very reduced or no leachability of harmful metals, especially with regard to heavy metals under atmospheric environmental conditions, especially at a temperature of 20°C-50°C and under the influence of air and water. The raw material comprises subgroup metals whereby at least one metal selected from the group consisting of Fe, Zn, Cr, Ba, Pb, Cd, Ti, Co and Cu is contained therein. Preferably the material has a content of at least one of the aforementioned subgroup metals in the range of 10-58 wt.%, most preferably 10-45 wt.%.

The waste to be used includes at least one metal from the group consisting of Fe, Zn, Cr, Ba, Pb, Cd, Ti, Co and Cu and is derived from electroplating sludge, $Na_2Cr_2O_7$ solution, paint sludges, heavy metal sludges, miscellaneous sludge comprising heavy metals and oil, leather sludge with $Cr^{+6}$, paper sludge, fly ash or bottom ash.

The above organic, insoluble industrial raw material can be produced by a method for treating the above-defined waste which is characterized by:

(a) mixing the waste material with a plastic material comprising silicon and aluminum and capable of forming compounds with metals in step (c) showing a very reduced or non-leachability of harmful metals, especially the heavy metals, under atmospheric environmental conditions under the influence of air and water;

(b) preparing the plastic mixture into shaped articles with a high surface; and

(c) drying the articles at a temperature in the range of 60°-200°C to remove water and/or organic solvents, pyrolizing further included organic matter in an oxygen-free environment at a temperature of 450°-500°C and calcining and sintering the remaining inorganic matter at a temperature in the range of 750°-1300°C to form stable, solid, insoluble silicate complexes.

In a preferred embodiment of the present invention the waste is subjected to a primary treatment before step (a) comprising adding the plastic material and neutral-izing, precipitating, coagulating, sedimenting, filtering, dewatering, absorbing or flocculating the waste in dependence upon its characteristics to form a residue. Depending on the state of the waste material, the primary treatment process may not be necessary and can be bypassed. The choice of treatment depends on the type of waste and efficiency of technology, and will be obvious to those skilled in the art. The following are some examples:

(a) Neutralization would be used to raise the pH value of acidic waste;

(b) precipitation would be used to isolate heavy metal hydroxides (for example $Cu(OH)_2$, $Cr(OH)_3$, $Zn(OH)_2$, $Ca(OH)_2$);

(c) coagulation would be used to coagulate particulate matter in waste solution;

(d) sedimentation is used when the plastic material combined with waste material results in the latter settling so that the liquid portion may be removed; and

(e) filtration via filter press is used to squeeze the water out of the plastic material/waste mixture.

In another preferred embodiment of the present invention, absorbents are added to the plastic material if this material does not exhibit a sufficient absorptivity by itself.

The amount of the plastic material and the optionally used absorbent in step (a) of the present production method depends on the properties, consistency and composition of the waste material that is mixed together. It is also dependent upon the properties of the plastic materials and the absorbents themselves. The constituents may be mixed together in any proportion as long as the mixture produced is shapable with conventional shaping equipment in a manner suitable to form shapes which have a form and dimensional stability for the production of the finished article. The preferred ranges are 5-50 wt.% plastic material and optionally 0.1-10 wt.% absorbent with regard to the total mixture.

The shaping step (b) to form shaped articles like granules or other large surface area shapes may be performed by any conventional shaping means. For example, granules may be formed by extruding the material and then cutting it into pieces. The big advantage of granules is the increased surface area provided which facilitates the treating and handling of the waste. After extrusion and forming, the granules are stable enough to be transported without the risk currently present in transporting waste material. Further possibilities of forming shapes with a large surface are dry spraying in a fluidized bed dryer or pressing.

The amount of plastic material used in the primary treatment system depends on the relative properties of the plastic material, the waste material and the treatment technology. It generally lies in the range of 0.1-50 wt.% with regard to the waste material.

A suitable plastic material for the present invention should have the following properties in powder form:

- good absorption
- capability of being sintered
- ability to form non-soluble complex

with inorganic waste material.

Preferably the plastic material exhibits a high plasticity and capability to form granules.

A preferred plastic material of the present invention comprises clay and/or alumosilicates with an average particle size of less than 5 $\mu$m. Clay has a long history of industrial use and as a chemical reagent it is safe to handle. Clay may be used in the primary treatment system to improve coagulation, flocculation, sedimentation, absorption, neutralization and dewatering, and also to fix the waste material to the clay. The present invention provides a secondary treatment system which permits the fixing of the waste material to the clay or the alumosilicates and maintaining the plasticity and shape stability of the mixture, which is very important for forming technology. At the thermal preparation step (c) there is created a very strong connection (chemical-physical bonding) between the clay and the inorganic parts of the waste material to form a stable, artificial material useful as industrial raw material for a variety of applications.

A preferred plastic material of the present invention may include alkaline metals, earth alkaline metals, boron and/or iron in addition to silicon and aluminum. The above components may facilitate the primary treatment and absoprtion, silicatization and reaction of the waste to convert the waste to a stable solid complex of insoluble material.

Suitable minerals which preferably are included in the plastic material are albite, calcite, bauxite, borax, dolomite, felspar potash, flint, kaolinite, kyanite, magnesite, mica, montmorillonite, nepheline, orthoclase, sillimanite, spodumene, talc, vermiculate, wollastonite, aluminum oxide, silica oxide, lead bisilicate, dictometious earth, zeolyte and Na/Ca borosilicate glass.

The plastic material used in the present invention may preferably comprise 40-50 wt.% of a mineralogical composition including the three-layer minerals illite, vermiculite, montmorillonite and chlorite.

An especially preferred plastic material includes shale. The chemical composition of the shale used may be as follows: $SiO_2$ 58.26%, $Al_2O_3$ 18.82%, $Fe_2O_3$ 6.96%, $MgO$ 2.9%, $CaO$ 6.56%, $NaO$ 0.33%, $K_2O$ 4.87%, $TiO_2$ 0.98%, $MnO_2$ 0.13%, $B_2O_3$ 0.19%. Shale is clay previously sedimented, which has been subjected to pressure. Shale can be crushed and blended to produce excellent plastic materials. Such material is capable of strongly fixing trace material in its body.

In the method of the present invention it is preferred to use a plastic material with a high concentration of particles less than 1 $\mu$m in size. The processes of coagulation, precipitation, flocculation, sedimentation and dewatering are assisted by the use of very fine powder, especially less than 0.5 $\mu$m.

For neutralization it is preferred to use a plastic material with soluble salt concentration (Mg, Ca, Na, K) for replacing hydroxides. The soluble salt concentration may be in the range of 800 ppm.

To improve the absorption of the plastic material it may be mixed with an absorbent which can absorp more water than the plastic material alone. The use of an absorbent therefore may reduce the necessary amount of the plastic material. For example clay can absorp 25% liquid whereas clay plus an absorbent can absorp up to 20 times its weight in liquid. Preferred examples of absorbents are Na-Ca borosilicate expanded glass, expanded clay and/or expanded silicate. Further possible absorbents are acrylamide copolymers. The most preferred absorbents are Na-Ca borosilicate expanded glass (0.1-10%) and perlite because they also contain silicate, which helps to form complexes, and fluxes (Na-Ca) which assist in the production of granules having the desired characteristics. A preferred combination of a plastic material and an absorbent may comprise 40 wt.% clay and 3 wt.% of one of the above absorbents with regard to the total mixture of the waste material. The components may be fed to a mixer automatically by conventional conveyance systems. The mixture must be plastic enough to offer good shaping and granulation properties.

After shaping the mixture to shaped articles with a large surface in step (b) of the present invention, the articles are heat-treated to remove organic matter and to bond the inorganic matter in stable, solid and insoluble silicate complexes in step (c) of the inventive method. Thereby the material may be fed into a conveyorized dryer, oven or kiln, and the shaped articles are dried, heated, pyrolyzed and/or calcinated. The particular manner in which this is done will depend on the source of the waste mixture, the properties of the inorganic or organic materials and the desired process steps. Conveyorized ovens and kilns provide the flexibility to economically build a small or large waste treatment unit at the waste site thereby circumventing the necessity of transporting waste material. Conveyorized ovens and kilns may also be mobile. The capacity range of conveyorized ovens and kilns may be less than 1 ton per day to more than 100 tons per day. The process of the present invention further provides working conditions which are readily adjustable. A wide range of temperatures is available (60-1300°C) depending on the chosen process. Using a conveyorized system minimizes the level of harmful substances in the system environment. During the thermal treatment the inorganic components of the waste material are transformed into compounds bound to silicates which are produced from the plastic material and made harmless.

In the case of organic material included in waste products, the shaped articles are first dried and thereafter heated in an oxygen-free environment (pyrolysis). During the drying step which occurs in the temperature range of 60-200°C organic solvents and water may be distilled and reclaimed. After drying the shaped articles are pyrolyzed at a temperature of 450-500°C for a period of about 30 minutes. The resulting organic gases may be condensed to organic liquids (oils).

According to the inventive method for producing the inorganic, insoluble industrial raw material the shaped articles are calcinated and sintered after drying and pyrolyzing. The calcinating and sintering step is performed at a temperature between 750 and 1300°C, whereby 800 to 980°C is particularly preferred. The calcinating time preferably lies in the range of 3 to 20 minutes, and 3 to 10 minutes and especially 5 to 6 minutes are most preferred.

The exhaust gases produced in step (c) may be incinerated in an incineration unit. If the exhaust air requires a cleaning system, it may be passed through scrubbers and finally filtered through a pollution filter system.

In the process of the present invention the surplus heat is preferably recycled using conventional waste heat recovery methods such as a heat exchanger.

The method of the present invention is preferably performed in an automatic, closed conveyorized system which is indirectly heated. By using an indirectly heated system the present invention permits reducing the volume of exhaust air and dust. In a closed system no human contact or presence is necessary in performing the method of the present invention, and since all materials are contained within the closed system until the final articles are produced, there is no health hazard.

During thermal preparation of the mixture of the waste and the plastic material (sintering, silicatization, vitrification and melting reaction), the solid inorganic waste material and silicates are converted to form a stable solid complex of insoluble material with physical-chemical bonds, which is safe to use as an industrial raw material. Leaching tests, particularized later herein, confirm the high stability of the final product produced using the present invention.

Furthermore, the invention relates to the use of the inorganic, insoluble industrial raw material as fillers. These fillers can advantageously be used for paint and coatings, sealants, asphalt or rubber, fire protection systems, boat construction and repair and so on.

A further use for the above industrial raw material can be seen as controlled size aggregates for gypsum wall-board, roofing systems, castable and/or gunning refractories, lightweight pre-fab concrete units, lightweight structural concrete, low density oil well cements, drilling mats and so on.

The industrial raw material of the present invention can also be used as an additive for abrasives, as catalyst support, or vacuum mold fabrication and energy management auto body structures.

The following is a description by way of example of certain embodiments to illustrate the present invention, reference being made to the accompanying drawings in which:

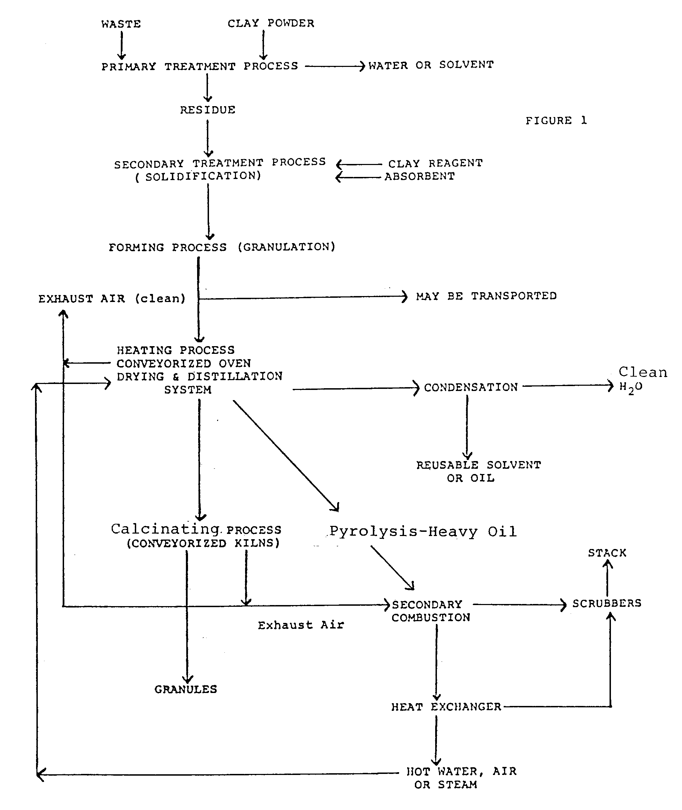

The figure diagrammatically shows a system for practicing a preferred embodiment according to the teaching of the present invention. Waste material and clay powder are mixed in the primary treatment process. Figure 1 shows water or organic solvent (liquid-solid separation) flowing out of the primary treatment system. The residue of the primary treatment system is mixed with suitable clay material and absorbent material and solidified. The solidified material is shaped to form granules or other shapes with a large surface area which are thermally prepared by heating, distilling and pyrolysis and calcination. If necessary, the exhaust air is incinerated in an incinerator and cleaned in a pollution control system. Solvent, water or oil may be condensed and recycled.

The present invention can be used in a very broad area of industrial and hazardous waste environment. For example, heavy metals are found in inorganic solutions and miscellaneous waste materials. Cyanide is found in metal plating liquid waste. Dirty oils are found in solid organic or inorganic waste. PCB is found in oil waste.

Example 1 (Oil sludge and heavy metals)

The on-site method of treating, handling, heating and calcinating waste water and sludge generating from recycling metals from car destruction facilities having a high content of Cu and Pb was achieved according to the teachings of the present invention. The waste water was treated to prepare it for the primary treatment process. The waste water containing organic waste was mixed with 5% powdered plastic clay to improve coagulation, flocculation, sedimentation and homogeneity of the waste during primary treatment. The organic sludge generated from the sedimentation process consisted of 31% organic material (oil), 28% $H_2O$ solution with NaOH (weak) and 51% solid parts (clay, metals and heavy metals). Organic sludge was mixed with plastic clay (shale) powder during primary treatment which included 1% inorganic absorbent (Na/Ca borosilicate expanded glass), weight ratio 2:1 (sludge:clay). This mixture was then shaped to form granules. The stable solid granules were transferred to a conveyorized electric oven where they were heated and dried for 35 minutes at a temperature of 100-120°C to 96% solid. After drying, the material was conveyed to be heated at 460°C in an oxygen-free environment for 25 minutes (pyrolysis). This produced gases which were condensed to oil. The remaining solid was calcined in a conveyorized electrically heated kiln for 12 minutes at 1050°C and this produced inert granules with a particle size of 7 mm, a density of 630 kg/m³, a specific gravity of 800 kg/m³, a pH value of 7.3 and a temperature resistance up to 1050°C. The produced material can be used in the building industry as raw material or as filler. The exhausted air was combusted in an incinerator and the surplus energy was used for producing hot water via the heat exchanger.

5

Example 2 (31% $Na_2Cr_2O_7$)

The method of treating, handling, drying and firing of sodium dichromate effluent and waste solution on-site of the waste was achieved according to the teachings of the present invention. Sodium dichromate effluent is generated from chrome plating. 31% sodium dichromate waste solution was mixed with the plastic material (clay powder - shale plus 5% absorbent - Na/Ca borosilicate expanded glass or acrylamide copolymer and 3% of nepheline). The weight ratio was 1:1 of solution:plastic material. This mixture was then mixed in a mechanical fluidized bed with vacuum drying abilities to form granules which were dried for 25 minutes at 150 to 200°C. The dry granules were mixed a second time with waste solution 1:1 plus 3% absorbent. This mixture was then formed (in a mechanical fluidized bed with vacuum drying ability) into granules which were conveyed to a conveyorized kiln for firing at 1120°C for 11 minutes. The resulting solid granules were inert and safe to use as raw material for (gunning) refractories, particularly fire protecting systems and as an additive for abrasives.

Example 3 (Zinc sludge)

A typical composition of zinc sludge from metals industries had the following chemical composition:

| | |
|---|---|
| Water | 35.11% |
| Ash | 27.17% |
| Zinc | 320 g/kg wet material |
| Iron | 26.4 g/kg wet material |
| Chromium | 0.564 g/kg wet material |
| Lead | 9.78 g/kg wet material |

The above zinc sludge was mixed with 50% clay, 3% nepheline and 6.5% flint. The mixture was added into the reactor-mechanical fluidized bed, where with adjustable rotation speed and temperature a desirable dimension of granulates was achieved.

The granulates were then thermally treated with a graduated temperature from 20°C-990°C with a retention time of 9 minutes.

For thermal treatment a continual indirect heating system, a commercially available belt system, a tube system and a roll system was used.

During thermal preparation - calcination, sintering - a very stable spheric product was produced with low density spheres containing a multiplicity of independent closed air cells surrounded by a unique tough outer shell. The granulates had the following properties:

| | |
|---|---|
| Sphere size range: | 0.5-15 mm |
| Bulk density: | 400-500 kg/m$^3$ |
| Specific gravity: | 600-700 kg/m$^3$ |
| Surface characteristics: | Hydrophilic |
| Color: | brown, grey |
| Odor: | none |
| Thermal stability: | 1000°C |

The above product may be used as controlled size aggregates for lightweight structural concrete, lightweight pre-fab concrete units, castable and/or gunning refractories, insulation blocks, gypsum wallboard and roofing systems.

Stability Tests

The treated product produced in the processes of Examples 1 to 3 above was subjected to the leachate extraction procedure according to Canadian Standard Regulation 309. Also subjected to the same stability test was a normal brick of the clay variety. In each case the extraction time was 24 hours. The quantity of 0.5 N acetic acid used by pH adjustment is indicated in the table below. At the end of the extraction period, enough distilled water was added to bring the total volume of liquid to 1000 ml. The pH of the leachate was adjusted to 5.0 ± 0.2 after 15 minutes, 1, 3, 6 and 22 hours from the start.

6

Table 1

| Sample Characteristics | | | | | | |
|---|---|---|---|---|---|---|
| Sample | Moisture Content% | Wt of (g) Sample used | Final Volume Leachate (ml) | Acetic Acid ml | pH | |
| | | | | | Initial | Final |
| Example #1 | <0.1 | 36.90 | 738 | 7.8 | 5.9 | 4.9 |
| Example #2 | <0.1 | 38.69 | 774 | 0.2 | 4.9 | 4.8 |
| Normal Brick | 0.28 | 50.14 | 1000 | 0.85 | 5.7 | 5.0 |

## Table 2 - Test Results

### Example 1 sample

### ICAP PLASMA SCAN ON LEACHATE

MG/L (=ppm)

| | |
|---|---|
| Silicon (Si) | 16.0 |
| Aluminum (Al) | 1.9 |
| Iron (Fe) | 0.05 |
| Calcium (Ca) | 89 |
| Magnesium (Mg) | 38 |
| Sodium (Na) | 2 |
| Potassium (K) | <2 |
| Titanium (Ti) | <0.02 |
| Manganese (Mn) | 0.11 |
| Phosphorus (P) | <0.05 |
| Barium (Ba) | 0.09 |
| Chromium (Cr) | <0.02 |
| Zirconium (Zr) | <0.02 |
| Copper (Cu) | 0.29 |
| Nickel (Ni) | 0.05 |
| Lead (Pb) | <0.05 |
| Zinc (Zn) | 1.00 |
| Vanadium (V) | 0.04 |
| Strontium (Sr) | 0.11 |
| Cobalt (Co) | <0.01 |
| Molybdenum (Mo) | 0.07 |
| Silver (Ag) | <0.05 |
| Cadmium (Cd) | <0.005 |
| Beryllium (Be) | <0.01 |
| Boron (B) | <0.5 |

7

## Example 2 sample

### ICAP PLASMA SCAN ON LEACHATE

#### MG/L  (=ppm)

| | |
|---|---|
| Silicon (Si) | 1.5 |
| Aluminum (Al) | <0.1 |
| Iron (Fe) | <0.05 |
| Calcium (Ca) | 7.0 |
| Magnesium (Mg) | 0.36 |
| Sodium (Na) | 7 |
| Potassium (K) | 4 |
| Titanium (Ti) | <0.02 |
| Manganese (Mn) | <0.02 |
| Phosphorus (P) | <0.05 |
| Barium (Ba) | <0.01 |
| Chromium (Cr) | 0.16 |
| Zirconium (Zr) | <0.02 |
| Copper (Cu) | <0.02 |
| Nickel (Ni) | <0.02 |
| Lead (Pb) | <0.05 |
| Zinc (Zn) | <0.02 |
| Vanadium (V) | 0.03 |
| Strontium (Sr) | <0.02 |
| Cobalt (Co) | <0.01 |
| Molybdenum (Mo) | <0.02 |
| Silver (Ag) | <0.05 |
| Cadmium (Cd) | <0.005 |
| Beryllium (Be) | <0.01 |
| Boron (B) | <0.5 |

8

<u>Normal commercial clay brick sample</u> (produced in Ontario, Canada)

<u>ICAP PLASMA SCAN ON LEACHATE</u>

MG/L (= ppm)

| | |
|---|---|
| Silicon (Si) | 2.7 |
| Aluminum (Al) | 0.2 |
| Iron (Fe) | <0.05 |
| Calcium (Ca) | 41 |
| Magnesium (Mg) | 3.4 |
| Sodium (Na) | 2 |
| Potassium (K) | 4 |
| Titanium (Ti) | <0.02 |
| Manganese (Mn) | 0.05 |
| Phosphorus (P) | <0.05 |
| Barium (Ba) | 0.10 |
| Chromium (Cr) | <0.02 |
| Zirconium (Zr) | <0.02 |
| Copper (Cu) | <0.02 |
| Nickel (Ni) | <0.02 |
| Lead (Pb) | <0.05 |
| Zinc (Zn) | 2.0 |
| Vanadium (V) | 0.22 |
| Strontium (Sr) | 0.09 |
| Cobalt (Co) | <0.01 |
| Molybdenum (Mo) | <0.02 |
| Silver (Ag) | <0.05 |
| Cadmium (Cd) | <0.005 |
| Beryllium (Be) | <0.01 |
| Boron (B) | <0.5 |

The above stability testing results show excellent stability of waste material treated using the present invention. For example, in the case of chromium, environmental protection legislation recently introduced in the Province of Ontario requires chromium levels less than 0.5 ppm for the waste material not to be categorized as "waste". The above test results were surprising in that the chromium levels, which are typically of most concern, were low enough for the treated waste material not to be classified as waste under Province of Ontario regulations.

With the present invention inorganic, insoluble industrial raw materials can be economically produced from waste material which show a broad range of applications. Due to the high stability of the produced material which is indicated by the low leachability of metals, especially of heavy metals, the raw material can safely be handled and used.

**Claims**

1. Inorganic, insoluble industrial raw material based on processed waste including at least one metal from the group consisting of Fe, Zn, Cr, Ba, Pb, Cd, Ti, Co, Cu and being derived from electroplating sludge, paint sludges, heavy metal sludges, miscellaneous sludge comprising heavy metals and oil, leather sludge, paper sludge, $Na_2Cr_2O_7$ solution, fly ash or bottom ash, characterized by a particle size of 0.2-15 cm, preferably 0.3-8 cm, a bulk density of 400-1000 kg/m$^3$, a specific gravity of 600-1300 kg/m$^3$, a pH value of 6.0-10.5, preferably of 6.5-7.8, an absorption of moisture in the range of 0.5-14 wt.%, a temperature resistance of up to 1150°C, a brown to grey color, non-odor, a metal content of 0.5-60 wt.% and a reduced or non-leachability of harmful metals, especially the heavy metals, under atmospheric environmental conditions under the influence of air and water.

2. Inorganic, insoluble industrial raw material as claimed in claim 1 characterized in that the metal content ranges between 10-45 wt.%.

3. A method for treating hazardous or toxic waste including at least one metal from the group consisting of Fe, Zn, Cr, Ba, Pb, Cd, Ti, Co, Cu and being derived from electroplating sludge, paint sludges, heavy metal sludges, miscellaneous sludge comprising heavy metals and oil, leather sludge, paper sludge, $Na_2Cr_2O_7$ solution, fly ash or bottom ash, capable of producing the inorganic, insoluble industrial raw material as claimed in claim 1, characterized by:

(a) mixing the waste material with a plastic material comprising silicon and aluminum and capable of forming compounds with metals in step (c) showing a very reduced or non-leachability of harmful metals, especially the heavy metals, under atmospheric environmental conditions under the influence of air and water;

(b) preparing the plastic mixture into shaped articles with a high surface; and

(c) drying the articles at a temperature in the range of 60°-200°C to remove water and/or organic solvents, pyrolizing further included organic matter in an oxygen-free environment at a temperature of 450°-500°C and calcining and sintering the remaining inorganic matter at a temperature in the range of 750°-1300°C to form stable, solid, insoluble silicate complexes.

4. Method according to claim 3, characterized in that before the step (a), the waste is subjected to a primary treatment comprising adding plastic material and neutralizing, precipitating, coagulating, sedimenting, filtering, dewatering, absorbing or flocculating the waste depending on its consistency to form a residue.

5. Method according to claims 3 and 4, characterized in that absorbents are added to the plastic material if this material does not exhibit a sufficient absorptivity by itself.

6. Method according to claims 3 and 5, characterized in that the amount of the plastic material ranges between 5 and 50 wt.% and the optional absorbents comprise a range of 0.1-10 wt.% with regard to the total mixture.

7. Method according to claim 4, characterized in that the amount of the plastic material lies in the range of 0.1-50 wt.% with regard to the waste material.

8. Method according to claims 3 and 4, characterized in that the plastic material comprises clay and/or alumosilicates with an average particle diameter of less than 5 $\mu$m.

9. Method according to claims 3 and 4, characterized in that the plastic material comprises alkaline metals, earth alkaline metals, boron and/or iron in addition to silicon and aluminum.

10. Method according to claims 3 and 4, characterized in that the plastic material includes one or more of the minerals albite, calcite, bauxite, borax, dolomite, felspar potash, flint, kaolinite, kyanite, magnesite, mica, montmorillonite, nepheline, orthoclase, sillimanite, spodumene, talc, vormiculate, wollastonite, aluminum oxide, silica oxide, lead bisilicate, dictometious earth, zeolyte and Na/Ca borosilicate glass.

11. Method according to claims 3 and 4, characterized in that the plastic material comprises 40-50 wt.% of three-layered clay minerals such as illite, vermiculate, montmorillonite and chlorite.

12. Method according to claims 3 and 4, characterized in that the plastic material comprises shale.

13. Method according to claims 3 and 4, characterized in that the plastic material has a high concentration of particles with an average particle size of less than 1 $\mu$m.

14. Method according to claim 5, characterized in that as absorbent expanded glass on the basis of Na/Ca-borosilicate, perlite and/or expanded clay is used.

**15.** Method according to claim 3, characterized in that in the step (b) the mixture is extruded and then divided into granules.

**16.** Method according to claim 3, characterized in that the organic gases resulting from the step (c) are condensed to organic solvents or oils.

**17.** Method according to claim 3, characterized in that the exhaust gases produced in the step (c) are incinerated and optionally washed by scrubbers and finally filtrated.

**18.** Use of the inorganic, insoluble industrial raw material as claimed in claim 1 as fillers.

**19.** Use of the inorganic, insoluble industrial raw material as claimed in claim 1 as controlled-size aggregates for the building industry.

**Patentansprüche**

**1.** Anorganisches unlösliches, industrielles Rohmaterial auf Basis von verarbeitetem Müll, das mindestens ein Metall aus der Gruppe, bestehend aus Fe, Zn, Cr, Ba, Pb, Cd, Ti, Co und Cu, einschliesst, und erhalten wird aus Galvanisierschlamm, Lackierungsschlämmen, Schwermetallschlämmen, Mischschlamm, umfassend Schwermetalle und Öl, Lederschlamm, Papierschlamm, $Na_2Cr_2O_7$-Lösung, Flugasche oder Bodenasche, **gekennzeichnet** durch eine Partikelgrösse von 0,2 bis 15 cm, vorzugsweise 0,3 bis 8 cm, eine Schüttdichte von 400 bis 1000 kg/m$^3$, ein spezifisches Gewicht von 600 bis 1300 kg/m$^3$, einen pH-Wert von 6,0 bis 10,5, vorzugsweise von 6,5 bis 7,8, eine Feuchtigkeitsabsorption im Bereich von 0,5 bis 14 Gew.%, eine Temperaturbeständigkeit von bis zu 1150°C, eine braune bis graue Farbe, Geruchlosigkeit, einen Metallgehalt von 0,5 bis 60 Gew.%, und eine reduzierte oder nicht vorhandene Auswaschbarkeit von gefährlichen Metallen, insbesondere von Schwermetallen, unter Atmosphärenumgebungsbedingungen unter Einfluss von Luft und Wasser.

**2.** Anorganisches unlösliches, industrielles Rohmaterial gemäss Anspruch 1, dadurch **gekennzeichnet,** dass der Metallgehalt im Bereich von 10 bis 45 Gew.% liegt.

**3.** Verfahren zur Behandlung von gefährlichem oder toxischem Abfall, einschliesslich mindestens eines Metalls aus der Gruppe, bestehend aus Fe, Zn, Cr, Ba, Pb, Cd, Ti, Co und Cu, der aus Galvanisierschlamm, Lackierungsschlämmen, Schwermetallschlämmen, Mischschlamm, umfassend Schwermetalle und Öl, Lederschlamm, Papierschlamm, $Na_2Cr_2O_7$-Lösung, Flugasche oder Bodenasche entstammt, das in der Lage ist, das anorganische unlösliche, industrielle Rohmaterial gemäss Anspruch 1 herzustellen, **gekennzeichnet** durch
(a) Mischung des Abfallmaterials mit einem plastischen Material, das Silicium und Aluminium umfasst und in der Lage ist, Verbindungen mit Metallen in Schritt (c) zu bilden, die eine sehr stark verringerte oder nicht vorhandene Auswaschbarkeit von gefährlichen Metallen, insbesondere Schwermetallen, unter Atmosphärenumgebungsbedingungen unter Einfluss von Luft und Wasser zeigen;
(b) Herrichten der plastischen Mischung zu Formkörpern mit hoher Oberfläche; und
(c) Trocknen der Körper bei einer Temperatur im Bereich von 60 bis 200°C zur Entfernung von Wasser und/oder organischen Lösungsmitteln, weiterhin Pyrolyse von darin eingeschlossener organischer Materie in einer sauerstofffreien Umgebung bei einer Temperatur von 450 bis 500°C, und Calcinieren und Sintern der restlichen anorganischen Materie bei einer Temperatur im Bereich von 750 bis 1300°C zur Bildung von stabilen, festen, unlöslichen Silicatkomplexen.

**4.** Verfahren gemäss Anspruch 3, dadurch **gekennzeichnet,** dass vor dem Schritt (a) der Abfall einer Primärbehandlung unterworfen wird, welche die Zugabe von plastischem Material und Neutralisieren, Ausfällen, Koagulieren, Sedimentieren, Filtrieren, Entwässern, Absorbieren oder Ausflockung des Abfalls in Abhängigkeit von seiner Konsistenz unter Bildung eines Rückstands umfasst.

**5.** Verfahren gemäss Ansprüchen 3 oder 4, dadurch **gekennzeichnet,** dass Absorbenzien zum plastischen Material zugesetzt werden, falls dieses Material nicht selbst eine hinreichende Absorptivität aufweist.

**6.** Verfahren gemäss Anspruch 3 und 5, dadurch **gekennzeichnet,** dass die Menge des plastischen Materials im Bereich von 5 bis 50 Gew.% liegt und die wahlweisen Absorbenzien einen Bereich von 0,1 bis 10 Gew.%, bezogen auf die Gesamtmischung, umfassen.

**7.** Verfahren gemäss Anspruch 4, dadurch **gekennzeichnet,** dass die Menge des plastischen Materials im Bereich von 0,1 bis 50 Gew.%, bezüglich des Abfallmaterials liegt.

**8.** Verfahren gemäss Ansprüchen 3 und 4, dadurch **gekennzeichnet,** dass das plastische Material Ton und/oder Alumosilicate mit einem durchschnittlichen Partikeldurchmesser von weniger als 5 $\mu$m umfasst.

**9.** Verfahren gemäss Ansprüchen 3 und 4, dadurch **gekennzeichnet,** dass das plastische Material Alkalimetalle, Erdalkalimetalle, Bor und/oder Eisen, zusätzlich zu Silicium und Aluminium, umfasst.

**10.** Verfahren gemäss Ansprüchen 3 und 4, dadurch **gekennzeichnet,** dass das plastische Material eines oder mehrere der Mineralien Albit, Calcit, Bauxit, Borax, Dolomit, Feldspat, Pottasche, Feuerstein, Kaolinit, Kyanit, Magnesit, Glimmer, Montmorillonit, Nephelin, Orthoclas, Sillimanit, Spodumen, Talk, Vermiculit, Wollastonit, Aluminiumoxid, Siliciumoxid, Bleibisilicat, Diatomeenerde, Zeolith und Na/Ca-Borsilicatgläser einschliesst.

**11.** Verfahren gemäss Ansprüchen 3 und 4, dadurch **gekennzeichnet,** dass das plastische Material 40 bis 50 Gew.% dreischichtiger Tonmineralien umfasst, wie Illit, Vermiculit, Montmorillonit, und Chlorit.

**12.** Verfahren gemäss Ansprüchen 3 und 4, dadurch **gekennzeichnet,** dass das plastische Material Schiefer umfasst.

**13.** Verfahren gemäss Ansprüchen 3 und 4, dadurch **gekennzeichnet,** dass das plastische Material eine hohe Konzentration an Partikeln mit einer durchschnittlichen Partikelgrösse von weniger als 1 $\mu$m hat.

**14.** Verfahren gemäss Anspruch 5, dadurch **gekennzeichnet,** dass als Absorbens ein poröses Glas auf Basis von Na/Ca-Borsilicat, Perlit und/oder Blähton verwendet wird.

**15.** Verfahren gemäss Anspruch 3, dadurch **gekennzeichnet,** dass im Schritt (b) die Mischung extrudiert und dann zu Körnern zerteilt wird.

**16.** Verfahren gemäss Anspruch 3, dadurch **gekennzeichnet,** dass die organischen Gase, die aus dem Schritt (c) resultieren, zu organischen Lösungsmitteln oder Ölen kondensiert werden.

**17.** Verfahren gemäss Anspruch 3, dadurch **gekennzeichnet,** dass die Abgase, die im Schritt (c) produziert werden, verascht und wahlweise durch Gaswäscher gewaschen und schliesslich filtriert werden.

**18.** Verwendung des anorganischen unlöslichen, industriellen Rohmaterials gemäss Anspruch 1 als Füllstoff.

**19.** Verwendung des anorganischen unlöslichen, industriellen Rohmaterials gemäss Anspruch 1 als Aggregate von kontrollierter Grösse für die Bauindustrie.

**Revendications**

**1.** Matière première industrielle minérale, insoluble, à base de déchets traités comprenant au moins un métal du groupe constitué de Fe, Zn, Cr, Ba, Pb, Cd, Ti, Co, Cu et provenant d'une boue de revêtement électrolytique, de boues de peinture, de boues de métaux lourds, de boue mélangée comprenant des métaux lourds et de l'huile, de boue de cuir, de boue de papier, d'une solution de $Na_2Cr_2O_7$, de cendres volantes ou de cendres de fond, caractérisée par un diamètre des particules de 0,2-15 cm, de préférence de 0,3-8 cm, une densité volumique de 400-1000 kg/m$^3$, une masse spécifique de 600-1300 kg/m$^3$, une valeur du pH de 6,0-10,5, de préférence de 6,5-7,8, une absorption d'humidité dans la gamme de 0,5-14 % en poids, une résistance à la température jusqu'à 1150 °C, une couleur brune à grise, l'absence d'odeur, une teneur en métal de 0,5-60 % en poids et une aptitude au lessivage réduite ou nulle des métaux nuisibles, en particulier des métaux lourds, dans les conditions atmosphériques de l'environnement sous l'influence d'air et d'eau.

2. Matière première industrielle minérale, insoluble, selon la revendication 1, caractérisée en ce que la teneur en métal est comprise entre 10 et 45 % en poids.

3. Procédé pour traiter des déchets dangereux ou toxiques comprenant au moins un métal du groupe constitué de Fe, Zn, Cr, Ba, Pb, Cd, Ti, Co, Cu et provenant d'une boue de revêtement électrolytique, de boues de peinture, de boues de métaux lourds, d'une boue mélangée comprenant des métaux lourds et de l'huile, d'une boue de cuir, d'une boue de papier, d'une solution de $Na_2Cr_2O_7$, de cendres volantes ou de cendres de fond, capable de produire la matière première industrielle minérale, insoluble, selon la revendication 1, caractérisé par :

(a) le mélange des déchets avec une matière plastique comprenant du silicium et de l'aluminium et capable de former des composés avec des métaux dans l'étape (c) présentant une capacité au lessivage très réduite ou nulle des métaux nuisibles, en particulier des métaux lourds, dans les conditions atmosphériques de l'environnement sous l'influence d'air et d'eau;

(b) la préparation du mélange plastique pour former des articles façonnés ayant une grande surface; et

(c) le séchage des articles à une température dans la gamme de 60°-200°C pour enlever l'eau et/ou les solvants organiques, en outre la pyrolise de la matière organique incluse dans un environnement exempt d'oxygène à une température de 450-500°C, et la calcination et le frittage de la matière minérale restante à une température dans la gamme 750-1300°C afin de former des complexes de silicate stables, solides, insolubles.

4. Procédé selon la revendication 3, caractérisé en ce que, avant l'étape (a), les déchets sont soumis à un traitement primaire comprenant l'addition de matière plastique et la neutralisation, la précipitation, la coagulation, la sédimentation, le filtrage, la déshumidification, l'absorption ou la floculation des déchets en fonction de leur consistance pour former un résidu.

5. Procédé selon les revendications 3 et 4, caractérisé en ce qu'on ajoute des absorbants à la matière plastique si cette matière ne présente pas d'elle-même une capacité d'absorption suffisante.

6. Procédé selon les revendications 3 et 5, caractérisé en ce que la quantité de la matière plastique est comprise entre 5 et 50 % en poids, et les absorbants en option sont situés dans la gamme de 0,1 à 10 % en poids par rapport au mélange total.

7. Procédé selon la revendication 4, caractérisé en ce que la quantité de la matière plastique est située dans la gamme de 0,1 à 50 % en poids par rapport aux déchets.

8. Procédé selon les revendications 3 et 4, caractérisé en ce que la matière plastique comprend de l'argile et/ou des aluminosilicates avec un diamètre moyen des particules inférieur à 5 $\mu$m.

9. Procédé selon les revendications 3 et 4, caractérisé en ce que la matière plastique comprend des métaux alcalins, des métaux alcalino-terreux, du bore et/ou du fer en plus du silicium et de l'aluminium.

10. Procédé selon les revendications 3 et 4, caractérisé en ce que la matière plastique comprend un ou plusieurs des minéraux : albite, calcite, bauxite, borax, dolomite, feldspath, potasse, silexe, kaolinite, kyanite, magnésite, mica, montmorillonite, néphéline, orthoclase, sillimanite, spodumène, talc, vermiculite, wollastonite, oxyde d'aluminium, oxyde de silice, bisilicate de plomb, terre de diatomées, zéolite et verre en borosilicate de Na/Ca.

11. Procédé selon les revendications 3 et 4, caractérisé en ce que la matière plastique comprend 40-50 % en poids de minéraux en argile à trois couches tels que : illite, vermiculite, montmorillonite et chlorite.

12. Procédé selon les revendications 3 et 4, caractérisé en ce que la matière plastique comprend du schiste argileux.

**13.** Procédé selon les revendications 3 et 4, caractérisé en ce que la matière plastique a une concentration élevée de particules ayant un diamètre moyen des particules inférieur à 1 $\mu$m.

**14.** Procédé selon la revendication 5, caractérisé en ce que, comme absorbant, on utilise du verre expansé sur la base de borosilicate de Na/Ca, de perlite et/ou d'argile expansée.

**15.** Procédé selon la revendication 3, caractérisé en ce que dans l'étape (b), le mélange est extrudé et ensuite divisé en granules.

**16.** Procédé selon la revendication 3, caractérisé en ce que les gaz organiques résultant de l'étape (c) sont condensés en solvants organiques ou en huiles.

**17.** Procédé selon la revendication 3, caractérisé en ce que les gaz d'échappement produits dans l'étape (c) sont incinérés et lavés en option par des épurateurs et sont finalement filtrés.

**18.** Utilisation de la matière première industrielle minérale, insoluble, telle que revendiquée dans la revendication 1, comme charges.

**19.** Utilisation de la matière première industrielle minérale, insoluble, telle que revendiquée en revendication 1, comme agrégats aux dimensions contrôlées pour l'industrie du bâtiment.

FIGURE 1